# EUROPÄISCHE PATENTANMELDUNG

(11) **EP 4 151 438 A1**
(43) Veröffentlichungstag der Anmeldung: **22.03.2023**
(21) Anmeldenummer: 22195152.8
(22) Anmeldetag: 12.09.2022
(51) Int. Cl.: B60G 17/019

(54) **KRAFTFAHRZEUG MIT ZUMINDEST EINER SENSOREINRICHTUNG**

(30) Priorität: 20.09.2021 DE 102021124187
(71) Anmelder: MAN Truck & Bus SE, 80995 München (DE)
(72) Erfinder: Braun, Reimar, 80995 München (DE); Hölting, Christoph, 80995 München (DE)
(74) Vertreter: v. Bezold & Partner Patentanwälte - PartG mbB

(57) **Zusammenfassung**

Die Erfindung betrifft ein Kraftfahrzeug (10) mit einem Fahrwerk (1), einem Chassis (2), das am Fahrwerk (1) federnd gelagert ist, und zumindest einer Sensoreinrichtung (3) zum Erfassen von Umfelddaten. Die zumindest eine Sensoreinrichtung (3) ist dabei in einer vorbestimmten Referenzlage (P_{R}) bezüglich des Fahrwerks (1) und/oder einer Fahrbahn am Chassis (2) befestigt. Weiterhin umfasst das Kraftfahrzeug (10) eine Steuereinrichtung (4), die eingerichtet, die Umfelddaten im Falle einer (z. B. beladungsbedingten) Höhenabweichung (ΔH) der zumindest einen Sensoreinrichtung (3) von der Referenzlage (P_{R}) anzupassen, um dadurch eine durch die Höhenabweichung (ΔH) verursachte Änderung der Umfelddaten zumindest teilweise zu kompensieren.

## Beschreibung

Die Erfindung betrifft ein Kraftfahrzeug mit einem Fahrwerk, einem Chassis, das am Fahrwerk federnd gelagert ist, und zumindest einer Sensoreinrichtung zum Erfassen von Umfelddaten.

Moderne Assistenzsysteme benötigen in der Regel hochsensible Sensorik zur Umsetzung von gesetzlichen Vorschriften und/oder Komfortfunktionen. Die hierfür notwendige Sensorik wird dabei üblicherweise fest am Fahrzeug (z. B. im Bereich des Stoßfängers) montiert. Entscheidend für eine exakte Umfelderfassung ist in diesem Zusammenhang die Position und Orientierung (Lage) der Sensorik im Verhältnis zur Fahrbahnoberfläche. Beispielsweise bestimmt die Einbauhöhe vom Boden, in welchem Umfang z. B. ein Radar Objekte auf der Straße (z. B. andere Fahrzeuge) bzw. über der Straße (z. B. Schilderbrücken) erkennen kann. Verändert sich die Sensorlage, beispielsweise in Folge einer Beladung des Fahrzeugs, kann eine vorherige Kalibrierung bzw. Justierung des Sensors nicht mehr gültig sein, sodass z. B. von der Sensorik ermittelte Abstände ggf. nicht mehr richtig angegeben werden.

Vorgenannte Problematik ist dabei insbesondere im Fall von Nutzfahrzeugen, wie z. B. Sattelzugmaschinen oder Muldenkippern, relevant, da sich gerade im Betrieb dieser Fahrzeuge oftmals deutlich unterschiedliche Beladungssituationen ergeben. Ferner sind die vorgenannten Fahrzeuge oftmals mit einer Luftfederung an der Hinterachse oder an allen Achsen ausgestattet, um z. B. ein Absatteln eines Anhängers zu erleichtern, wobei über die Luftfederung in der Regel auch verschiedene fest programmierbare Fahrniveaus vom Fahrer eingestellt werden können. Entsprechend kann hier zudem die Position des Chassis zur Fahrbahnoberfläche und damit das Sensorniveau zur Fahrbahnoberfläche aufgrund von Niveauänderungen der Federung variieren.

Folglich ist es Aufgabe der Erfindung eine im Vergleich zum Stand der Technik verbesserte Möglichkeit zur Umfelderfassung, vorzugsweise für Nutzfahrzeuge, bereitzustellen. Insbesondere ist es Aufgabe der Erfindung eine Lösung bereitzustellen, mittels derer eine aufgrund einer Änderung der Einbauhöhe eines Sensors versurachte Performanceeinbuße kompensiert werden kann.

Diese Aufgabe kann mit den Merkmalen des unabhängigen Anspruchs 1 gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Lösungsgedanken wird ein Kraftfahrzeug bereitgestellt. Bevorzugt handelt es sich bei dem Kraftfahrzeug um ein Nutzfahrzeug. Unter dem Ausdruck "Nutzfahrzeug" kann hierbei insbesondere ein Kraftfahrzeug verstanden werden, das durch seine Bauart und Einrichtung speziell zum Transport von Gütern und/oder zum Ziehen ein oder mehrerer Anhängerfahrzeuge ausgelegt ist. Beispielsweise kann das Nutzfahrzeug ein Lastkraftwagen, ein Sattelschlepper, ein Baustellenfahrzeug und/oder eine landwirtschaftliche Maschine sein.

Das Kraftfahrzeug weist ein Fahrwerk und ein Chassis auf, wobei das Chassis am Fahrwerk (z. B. mittels Blattfedern) federnd gelagert ist. Als Fahrwerk kann dabei vorzugsweise die Gesamtheit aller Teile des Kraftfahrzeugs (z. B. Räder, Radträger, Radaufhängungen) verstanden werden, die eine Verbindung des Chassis, welches auch als Aufbau bezeichnet werden kann, zur Fahrbahn herstellen. Weiterhin umfasst das Kraftfahrzeug zumindest eine Sensoreinrichtung (z. B. eine Radareinrichtung) zum Erfassen von Umfelddaten. Als Umfelddaten können dabei bevorzugt Sensordaten verstanden werden, welche das Umfeld des Kraftfahrzeugs, z. B. in Hinblick auf mögliche Hindernisse und/oder andere Verkehrsteilnehmer, beschreiben. Hierbei ist vorgesehen, dass die zumindest eine Sensoreinrichtung in einer vorbestimmten Referenzlage bezüglich des Fahrwerks und/oder einer Fahrbahn am Chassis befestigt ist. Die Referenzlage (Position und Orientierung) kann dabei z. B. durch eine standardisierte Fahrzeugkonfiguration am Bandende der Fahrzeugfertigung (End-of-Line) gegeben sein. Beispielsweise kann die zumindest eine Sensoreinrichtung in Abhängigkeit des jeweiligen Fahrzeugmodells in einer vorbestimmten und damit bekannten Einbauhöhe bezüglich des Fahrwerks bzw. der Fahrbahn montiert sein. Bevorzugt sind somit die Abstände der zumindest einen Sensoreinrichtung relativ zu anderen Fahrzeugkomponenten (z. B. der Mitte der Vorderachse etc.) bekannt. Zudem oder alternativ kann die Referenzlage der zumindest einen Sensoreinrichtung z. B. mittels eines Koordinatensystems des Kraftfahrzeugs angebbar sein, dessen Ursprung sich vorzugsweise am oder im Fahrwerk des Kraftfahrzeugs befindet.

Weiterhin umfasst das Kraftfahrzeug eine Steuereinrichtung (z. B. ein Steuergerät der zumindest einen Sensoreinrichtung). Die Steuereinrichtung ist dabei eingerichtet, die Umfelddaten im Falle einer (z. B. beladungsbedingten) Höhenabweichung der zumindest einen Sensoreinrichtung von der Referenzlage anzupassen, um dadurch eine durch die Höhenabweichung verursachte Änderung der Umfelddaten zumindest teilweise (z. B. mittels einer Korrekturfunktion) zu kompensieren. Bevorzugt ist die Steuereinrichtung somit eingerichtet, die Umfelddaten zu korrigieren, sodass dadurch Veränderungen aufgrund einer (z. B. beladungsbedingten) Höhenänderung der zumindest einen Sensoreinrichtung zum Fahrwerk bzw. zur Fahrbahnoberfläche zumindest teilweise ausgeglichen werden. Mit anderen Worten kann das Anpassen der Umfelddaten quasi als ein softwareseitiges Neu-Kalibrieren der zumindest einen Sensoreinrichtung bezüglich der veränderten neuen Einbauhöhe verstanden werden. Auf vorteilhafte Weise kann dadurch insgesamt eine Performanceeinbuße der zumindest einen Sensoreinrichtung aufgrund einer ggf. temporär veränderten Einbauhöhe vermieden werden.

Nach einem ersten Aspekt kann die zumindest eine Sensoreinrichtung eine Radareinrichtung aufweisen. Unter dem Ausdruck "Radareinrichtung" kann hierbei eine Sende- und/oder Empfangseinheit für Radarsignale verstanden werden, wobei die Radareinrichtung auch mehrere derartige Einheiten umfassen kann. Bevorzugt weist die zumindest eine Sensoreinrichtung dabei eine Front-Radareinrichtung auf. D. h. die (Front-)Radareinrichtung kann insbesondere zum Erfassen eines - bezüglich einer Vorwärtsfahrtrichtung des Kraftfahrzeugs - vor dem Kraftfahrzeug befindlichen Umfeldbereichs ausgebildet sein. Aufgrund des in der Regel weit nach vorne gerichteten Erfassungsbereichs dieses Sensortyps sowie dessen Relevanz für sicherheitskritische Assistenzsysteme (z. B. autonome Notbremssysteme) kann dadurch auf vorteilhafte Weise insgesamt die Fahrzeugführung und Fahrzeugsicherheit des Kraftfahrzeugs verbessert werden.

Gemäß einem weiteren Aspekt kann die zumindest eine Sensoreinrichtung bezüglich des Chassis unbeweglich sein. Bevorzugt soll die zumindest eine Sensoreinrichtung somit bezüglich des Chassis mechanisch nicht verstellbar, insbesondere nicht höhenverstellbar, sein. D. h. die zumindest eine Sensoreinrichtung kann am Chassis in einer festen, unveränderliche Einbaulage befestigt sein. Zudem oder alternativ kann die zumindest eine Sensoreinrichtung einen, vorzugsweise kegelförmigen, Erfassungsbereich aufweisen, dessen Orientierung relativ zum Chassis unveränderlich ist. Der Erfassungsbereich kann somit nicht bezüglich des Chassis vorzugsweise (z. B. mechanisch oder elektronisch) verschwenkbar sein. Als Erfassungsbereich kann dabei bevorzugt ein Umfeldbereich verstanden werden, der von der zumindest einen Sensoreinrichtung abgegriffen werden kann, d. h. in dem z. B. Objekte erkannt werden können.

Nach einem weiteren Aspekt kann die Steuereinrichtung eingerichtet sein, einen Schätzwert für die Höhenabweichung auf Grundlage eines Lagemodells des Kraftfahrzeugs zu bestimmen. Unter dem Ausdruck "Schätzwert" kann dabei bevorzugt ein auf Grundlage von, z. B. von der Steuereinrichtung empfangenen und/oder abgefragten, Daten anhand eines vorbestimmten Zusammenhangs (Lagemodell) ermittelter ungefährer Wert für die tatsächliche Höhenabweichung verstanden werden. Weiterhin kann die Steuereinrichtung eingerichtet sein, die Umfelddaten auf Basis des Schätzwerts anzupassen. Beispielsweise kann anhand des Schätzwerts und einer Kennlinie, welche verschiedenen Höhenabweichungen bestimmte (z. B. durch Vorversuche ermittelte) Korrekturfaktoren zuordnet, eine entsprechende Anpassung bzw. Korrektur der Umfelddaten vorgenommen werden. Zudem oder alternativ kann auf Grundlage des Schätzwerts für die Höhenabweichung auch eine Koordinatentransformation der Umfelddaten vorgenommen werden, welche diese wieder zurück auf die ursprüngliche Erfassungslage (Referenzlage) abbildet. Das vorgenannte Lagemodell - unter welchem bevorzugt ein geometrisches bzw. räumliches Modell des Kraftfahrzeugs verstanden werden kann, welches dessen voraussichtliche Lage im Raum beschreibt - kann dabei zumindest eine der folgenden Informationen umfassen: die Referenzlage der zumindest einen Sensoreinrichtung, einen Radstand des Kraftfahrzeugs und mindestens eine Niveauänderungsinformation (z. B. eine Höhenänderung einer aktiven Federung). Die Referenzlage kann dabei ferner relative Lageinformationen der zumindest einen Sensoreinrichtung zu weiteren Fahrzeugkomponenten, wie z. B. einen horizontalen Abstand der zumindest einen Sensoreinrichtung zu einer Achse des Kraftfahrzeugs (Überhanglänge) und/oder einen vertikalen der zumindest einen Sensoreinrichtung zum Fahrwerk etc. umfassen. Die entsprechenden Informationen können dabei z. B. in einem Speicher der Steuereinrichtung hinterlegt sein. Mithilfe dieser Informationen kann die Steuereinrichtung eingerichtet sein, auf Grundlage des Lagemodells eine (z. B. beladungsbedingte) Lageänderung (z. B. Neigung) des Chassis relativ zum Fahrwerk zu ermitteln und dadurch einen Schätzwert für die Höhenabweichung der zumindest einen Sensoreinrichtung von der Referenzlage zu bestimmen, was nachfolgend noch eingehender beschrieben werden wird.

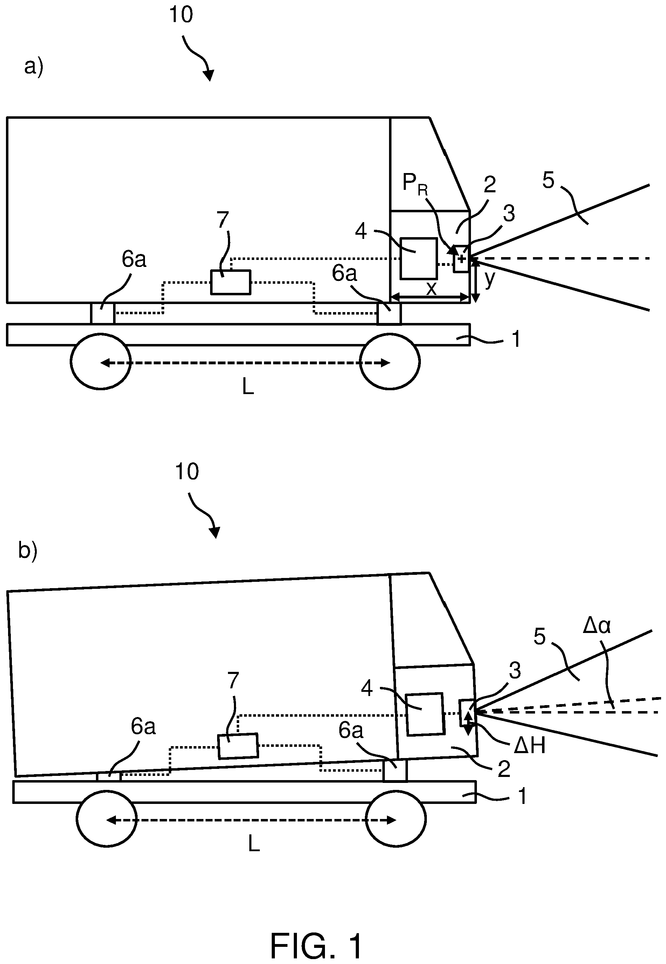

Gemäß einem weiteren Aspekt kann die zumindest eine Sensoreinrichtung ausgebildet sein, eine (z. B. beladungsbedingte) Elevationswinkelabweichung (z. B. ein Dejustagewinkel) der zumindest einen Sensoreinrichtung von der Referenzlage, vorzugsweise selbstständig, zu bestimmen. Vorzugsweise kann die zumindest eine Sensoreinrichtung somit eingerichtet sein, selbstständig eine Änderung ihrer Ausrichtung bzw. Neigung erkennen. Insbesondere im Zusammenhang mit Radarsensoren kann das Bestimmen der Elevationswinkelabweichung z. B. eine (statistische) Auswertung der Reflexionen von Radarobjekten (z. B. der Fahrbahn) erfolgen. Lediglich beispielhaft sei in diesem Zusammenhang z. B. auf die DE 10 2008 054 579 A1 verwiesen, welche eine entsprechende Sensoreinrichtung zeigt. Die bestimmte Elevationswinkelabweichung kann sodann an die Steuereinrichtung (z. B. über eine Datenverbindung) übertragen werden bzw. von der Steuereinrichtung abgefragt werden. Entsprechend kann die mindestens eine Niveauänderungsinformation des Lagemodells die Elevationswinkelabweichung umfassen. Lediglich beispielhaft kann der Steuereinrichtung von der zumindest einen Sensoreinrichtung eine Winkelabweichung von 4° "nach oben" mitgeteilt werden, wodurch über die bekannte Referenzlage der zumindest einen Sensoreinrichtung auf einen aus der Neigung des Kraftfahrzeugs resultierenden Neigungsanteil der Höhenabweichung ΔH geschlossen werden kann, was im Zusammenhang mit den Figuren 1 bis 3 eingehender beschrieben werden wird.

Nach einem weiteren Aspekt kann das Fahrwerk passiv gefederte (z. B. blattgefederte) Achsen, bevorzugt ausschließlich passiv gefederte Achsen, umfassen. Hierbei kann unter einer "passiv gefederten Achse" vorzugsweise eine gefederte Achse verstanden werden, welche keine gezielte Beeinflussung des Federverhaltens, insbesondere des Federwegs, der gefederten Achse zulässt. Mit andern Worten kann bei einer derartigen Achse bevorzugt keine bewusste Niveauregulierung (z. B. ein Anheben oder Absenken) des Chassis möglich sein. Lediglich beispielhaft können die passiv gefederten Achsen jeweils eine passive Federung, wie z. B. eine Blatt-, Schrauben- und/oder Torsionsfederung, umfassen. Gemäß diesem Aspekt kann die mindestens eine Niveauänderungsinformation des Lagemodells ferner eine, vorzugsweise vorbestimmte, Neigung des Kraftfahrzeugs im Falle einer maximal zulässigen Beladung des Kraftfahrzeugs umfassen. Diese Neigung, welche auch als Maximalneigung bezeichnet werden kann, kann beispielsweise durch entsprechende Vorversuche ermittelt werden, bei welchen das Kraftfahrzeug maximal zulässig beladen wird und die sich dadurch einstellende (Maximal-)Neigung des Kraftfahrzeugs gemessen wird. Zudem oder alternativ zur Neigung kann dabei direkt die sich bei maximal zulässiger Beladung einstellende Höhenänderung an den jeweiligen Achsen ermittelt werden. Insbesondere im Fall ausschließlich passiv gefederter Achsen, beim welchen in der Regel keine direkte Information bezüglich der aktuellen Niveaulage zur Verfügung stehen, ermöglicht das Einbeziehen der, vorzugsweise zuvor ermittelten bzw. bestimmten, maximal möglichen Neigung, die (z. B. beladungsbedingte) Höhenabweichung der zumindest einen Sensoreinrichtung näherungsweise abzuschätzen.

Gemäß einem weiteren Aspekt kann das Fahrwerk eine aktiv gefederte (z. B. luftgefederte) Achse (z. B. eine Hinterachse) umfassen. Als aktiv gefedert Achse kann dabei bevorzugt eine gefederte Achse verstanden werden, welche eine gezielte Beeinflussung des Federverhaltens (z. B. der Federkennlinie) und insbesondere eine gezielte Beeinflussung des Federwegs der gefederten Achse zulässt. Mit andern Worten kann bei einer derartigen Achse vorzugsweise eine bewusste Niveauregulierung (z. B. ein Anheben oder Absenken) des Chassis möglich sein. Lediglich beispielhaft kann die aktiv gefederte Achse eine aktive Federung, wie z. B. eine Luftfederung und/oder eine hydropneumatische Federung, umfassen. Weiterhin kann das Kraftfahrzeug eine Federsteuerung (z. B. ein Steuergerät und/oder eine Electronically Controlled Air Suspension) zur Niveauregulierung der aktiv gefederten Achse aufweisen. Die Federsteuerung kann hierbei eingerichtet sein, eine Höhenänderung der aktiv gefederten Achse zu bestimmen. Das Bestimmen kann dabei z. B. über entsprechende in einem Speicher der Federsteuerung hinterlegte Kennfelder erfolgen und/oder auf Basis von empfangenen Steuerbefehlen erfolgen. Bevorzugt kann die entsprechende Höhenänderung anschließend über einen CAN-Bus an die Steuereinrichtung übertragen werden bzw. über den CAN-Bus von der Steuereinrichtung abgefragt werden. Auf vorteilhafte Weise können so der Steuereinrichtung entsprechende Informationen über die Höhenänderung an der aktiv gefederten Achse zur Verfügung gestellt werden, welche sodann im Zusammenhang mit dem Lagemodell zur Schätzwertbestimmung verwendet werden können. Entsprechend kann nach diesem Aspekt die mindestens eine Niveauänderungsinformation des Lagemodells die vorgenannte Höhenänderung umfassen. Lediglich beispielhaft kann die mindestens eine Niveauänderungsinformation des Lagemodells somit die Angabe umfassen, dass z. B. die Hinterachse des Kraftfahrzeugs um 5 cm abgesenkt wurde. Besonders bevorzugt kann, falls das Fahrwerk mehrere aktiv gefederte (z. B. luftgefederte) Achsen umfasst, die Federsteuerung eingerichtet sein, die jeweiligen Höhenänderungen aller aktiv gefederten Achsen zu bestimmen. Auf vorteilhafte Weise können in das Lagemodell so Niveauänderungsinformationen bezüglich den jeweiligen Achsen einfließen, ohne dass hierfür zusätzliche Sensoreinrichtungen am Kraftfahrzeug angebracht werden müssen.

In einer Weiterbildung kann das Fahrwerk ferner eine passiv gefederte (z. B. blattgefederte) Achse umfassen. Entsprechend kann das Fahrwerk somit sowohl eine aktiv gefederte Achse als auch eine passiv gefederte Achse umfassen. Bevorzugt handelt es sich bei dieser passiv gefederten Achse um eine Vorderachse des Kraftfahrzeugs und/oder bei der aktiv gefederten (z. B. luftgefederten) Achse um eine Hinterachse des Kraftfahrzeugs. Beispielsweise kann die aktiv gefederte Hinterachse im Fall, dass das Kraftfahrzeug eine Sattelzugmaschine ist, das An- und Abkuppeln des Sattelaufliegers vereinfachen. Während hinsichtlich der aktiv gefederten Achse vorzugsweise wiederum eine Niveauänderungsinformation über die Federsteuerung bereitgestellt werden kann, steht der Steuereinrichtung hinsichtlich der passiv gefederten Achse zunächst keine unmittelbare Information betreffend deren (z.B. beladungsbedingte) Ausdehnungsänderung zur Verfügung. Besonders bevorzugt kann in diesen Zusammenhang daher die, wie vorstehend bereits ausgeführt wurde, die Elevationswinkelabweichung bestimmt und als weitere Niveauänderungsinformation mitberücksichtig werden.

Nach einem weiteren Aspekt kann das Fahrwerk ausschließlich aktiv gefederte (z. B. luftgefederte) Achsen umfassen. Lediglich beispielhaft kann das Kraftfahrzeug somit z. B. eine luftgefederte Vorderachse und eine luftgefederte Hinterachse aufweisen. Bevorzugt ist hier die Federsteuerung zur Niveauregulierung eingerichtet, eine Höhenänderung jeder der aktiv gefederten Achsen zu bestimmen. Folglich stehen in dieser Variante auf vorteilhafte Weise für alle Fahrzeugachsen entsprechende Höhenänderungen als Niveauänderungsinformation für das Lagemodell zur Verfügung, sodass hier ein besonders genauer Schätzwert für die Höhenabweichung der zumindest einen Sensoreinrichtung ermittelt werden kann.

Gemäß einem Aspekt der Erfindung kann das Kraftfahrzeug ferner ein Wiegesystem (z. B. ein On Board Weighing System) umfassen. Das Wiegesystem kann dabei eingerichtet sein, eine auf zumindest eine Achse des Fahrwerks wirkende Achslast zu bestimmen. Die zumindest eine Achse kann dabei eine der vorgenannten passiv oder aktiv gefederten Achsen sein. Alternativ kann es sich jedoch auch um eine weitere Achse des Fahrwerks zusätzlich zu den vorgenannten Achsen handeln. Besonders bevorzugt ist das Wiegesystem eingerichtet, die auf jede Achse des Fahrwerks wirkende jeweilige Achslast zu bestimmen. Hierzu kann das Wiegesystem z. B. an den jeweiligen Achsen angeordnete Drucksensoren umfassen. Entsprechend kann nach diesem Aspekt die mindestens eine Niveauänderungsinformation des Lagemodells die entsprechende Achslast und/oder eine von der Achslast abgeleitete Größe umfassen. Beispielsweise kann aus den ermittelten Achslasten die Schwerpunktlage und/oder mittels Federkennlinien der entsprechenden Federungen an der entsprechenden Achse auf eine Höhenänderung der jeweiligen Federung geschlossen werden. Folglich kann es sich bei der von der Achslast abgeleitete Größe z. B. um eine auf Basis einer Federkennlinie ermittelten Längen- und/oder Höhenänderung einer Federung an der zumindest einen Achse handeln. Im Falle, dass das Kraftfahrzeug somit ein entsprechendes Wiegesystem umfasst, können auf vorteilhafte Weise die (z. B. beladungsbedingten) Höhenänderungen an den entsprechenden Achsen, insbesondere auch für passiv gefederte Achsen, ermittelt werden, sodass hier wiederum eine besonders genaue Möglichkeit zur Bestimmung des Schätzwerts der Höhenabweichung der zumindest einen Sensoreinrichtung bereitgestellt werden kann.

Nach einem weiteren Aspekt kann die Steuereinrichtung eingerichtet sein, eine vom Schätzwert abhängige Korrekturfunktion auf die Umfelddaten zur zumindest teilweisen Kompensation der durch die Höhenabweichung verursachten Änderung anzuwenden. Die entsprechende Korrekturfunktion kann dabei z. B. eine Koordinatentransformationsfunktion und/oder Kennlinienfunktion umfassen. Lediglich beispielhaft kann in einem der Steuereinrichtung zugeordneten Speicher eine Kennlinienfunktion hinterlegt sein, die mehreren Höhenabweichungsschätzwerten (z. B. durch Vorversuche) vorbestimmte Korrekturwerte zuordnet. In Abhängigkeit des aktuell bestimmten Schätzwerts für die Höhenabweichung kann sodann z. B. ein entsprechender Korrekturwert aus der Kennlinie ausgelesen und/oder durch Interpolation aus mehreren Korrekturwerten aus der Kennlinie bestimmt werden. Zudem oder alternativ können die in einer von der Referenzlage abweichenden Höhe erfassten Umfelddaten auch mittels einer Koordinatentransformationsfunktion auf die Referenzlage zurückgerechnet werden. Auf vorteilhafte Weise wird so eine einfache Möglichkeit bereitgestellt, die durch die Höhenabweichung der Sensoreinrichtung verursachte Änderung der Umfelddaten zumindest teilweise zu kompensieren.

Gemäß einem weiteren Aspekt kann das Kraftfahrzeug keinen Bewegungs- und/oder keinen Lagesensor zur Ermittlung einer Lage des Chassis bezüglich des Fahrwerks umfassen. Bevorzugt kann das Kraftfahrzeug somit insbesondere keinen Beschleunigungssensor umfassen, der eine Bewegung- und damit Lageänderungsinformation ermitteln kann. Weiterhin kann das Kraftfahrzeug vorzugsweise auch keinen Abstandssensor umfassen, der direkt eine Abstandsänderung zwischen Chassis und Fahrwerk ermitteln kann. Alternativ zu einem gänzlichen Fehlen der entsprechenden Sensoren kann auch vorgesehen sein, dass einer oder mehrere dieser Sensoren womöglich zwar vorhanden sind, deren Information jedoch nicht zur Kompensation von durch eine Höhenabweichung der zumindest einen Sensoreinrichtung verursachte Änderung der Umfelddaten verwendet werden. Mit anderen Worten kann die Steuereinrichtung eingerichtet sein, die Umfelddaten im Falle einer Höhenabweichung der zumindest einen Sensoreinrichtung von der Referenzlage nicht auf Grundlage von Informationen von Sensoren zur direkten Ermittlung der Lage des Chassis bezüglich des Fahrwerks anzupassen.

Nach einem weiteren Aspekt kann die Höhenabweichung der zumindest einen Sensoreinrichtung von der Referenzlage eine Höhenabweichung umfassen, die aus einer Änderung einer Beladung, einer Gewichtsverteilung und/oder einer, vorzugsweise aktiven, Federung des Kraftfahrzeugs resultiert. Beispielsweise kann sich die entsprechende Höhenabweichung infolge eines Be- oder Entladens des Kraftfahrzeugs, einer Umverteilung von Fracht und/oder infolge eines Absenkens oder Anhebens des Chassis bezüglich dem Fahrwerk mittels einer Luftfederung und/oder einer hydropneumatischen Federung ergeben.

Gemäß einem weiteren Aspekt kann die Sensoreinrichtung eine Front-Sensoreinrichtung, vorzugsweise eine Front-Radareinrichtung, umfassen. Als Front-Sensoreinrichtung kann dabei bevorzugt eine Sensoreinrichtung verstanden werden, deren Sichtfeld im Wesentlichen in normaler Fahrtrichtung orientiert ist. Zudem oder alternativ kann die Sensoreinrichtung ausgebildet sein, einen in Vorwärtsfahrtrichtung vor dem Kraftfahrzeug befindlichen Bereich zu erfassen. Zudem oder alternativ kann die Sensoreinrichtung an einer Frontstoßstange des Kraftfahrzeugs befestigt sein. Zudem oder alternativ kann die Sensoreinrichtung Teil eines Notbremsassistenz-Systems und/oder eines Adaptive-Cruise-Control-Systems sein. Diese - an sich im Stand der Technik bekannten - Fahrerassistenzsysteme nutzen üblicherweise Daten frontseitiger Sensoreinrichtung zur Erkennung vor dem Kraftfahrzeug befindlicher Objekte bzw. vorausfahrende Kraftfahrzeuge, um auf dieser Basis dieser Ermittlung z. B. eine Geschwindigkeitsregelung bzw. Kollisionsvermeidung vorzunehmen.

Nach einem weiteren Aspekt kann die Steuereinrichtung ein (z. B. zentrales) Fahrzeugsteuergerät zur Steuerung einer Mehrzahl von Fahrzeugkomponenten umfassen. Zudem oder alternativ kann die Steuereinrichtung ein (z. B. sensorseitig integriertes) Sensor-Steuergerät zur Steuerung einer einzelnen Fahrzeugkomponente (z. B. einer Radareinrichtung) umfassen. Beispielsweise kann die Steuereinrichtung ein Radar-Steuergerät umfassen, welches bevorzugt direkt in die entsprechende Radareinrichtung (z. B. in Form einer Recheneinheit) integriert sein kann. Die Steuereinrichtung kann in diesem Zusammenhang z. B. in einem Gehäuse der zumindest einen Sensoreinrichtung angeordnet sein.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung eines Kraftfahrzeugs gemäß einer ersten Ausführungsform in zwei Konfigurationen;
- Figur 2:: eine schematische Darstellung eines Kraftfahrzeugs gemäß einer zweiten Ausführungsform in zwei Konfigurationen; und
- Figur 3:: eine schematische Darstellung eines Kraftfahrzeugs gemäß einer dritten Ausführungsform in zwei Konfigurationen.

Gleiche oder funktional äquivalente Elemente sind in allen Figuren mit denselben Bezugszeichen beschrieben und zum Teil nicht gesondert beschrieben.

Figur 1 zeigt eine schematische Darstellung eines Kraftfahrzeugs 10 gemäß einer ersten Ausführungsform in zwei Konfigurationen a) und b). Lediglich beispielhaft ist das entsprechende Kraftfahrzeug 10 in Form eines Nutzfahrzeugs, vorliegend ein Lastkraftwagen, dargestellt. Das Kraftfahrzeug 10 weist dabei ein Fahrwerk 1 und ein Chassis 2 auf, wobei das Chassis 2 am Fahrwerk 1 federnd gelagert ist. Vorliegend umfasst das Fahrwerk 1 beispielhaft zwei Achsen, nämlich eine Vorderachse und eine Hinterachse. Unter dem Ausdruck "Achse" kann dabei bevorzugt gemäß der Definition in B. Heißing (Hrsg.) et al., Fahrwerkshandbuch (DOI 10.1007/978-3-8348-8168-7), Kapitel 4, die gesamte Verbindung zweier Räder bzw. Radaufhängungen für Einzelräder samt ihrer Anbindung an das Chassis 2 verstanden werden.

Im vorliegenden exemplarischen Fall handelt es sich sowohl bei der Vorderachse als auch bei der Hinterachse um aktiv gefederte (z. B. luftgefederte) Achsen. Entsprechend kann sowohl die Vorder- als auch Hinterachse eine aktive Federung 6a (z. B. je in Form einer Luftfederung mit Luftfederbalg) aufweisen. Als aktive Federung 6a kann in diesem Zusammenhang bevorzugt eine Federung verstanden werden, welche ein gezieltes Beeinflussen deren Federverhaltens, insbesondere deren Federwegs, zulässt. Mit andern Worten kann bei einer derartigen aktiven Federung 6a vorzugsweise eine bewusste Niveauregulierung (z. B. ein Einstellen verschiedener vorprogrammierter Fahrniveaus) des Chassis 2 möglich sein. Hierzu kann das Kraftfahrzeug 10 eine Federsteuerung 7 zur Niveauregulierung der aktiv gefederten Achsen umfassen. Die Federsteuerung 7 kann hierbei eingerichtet sein, eine Höhenänderung der aktiv gefederten Achsen (z. B. anhand der vorprogrammierter Fahrniveaus) zu bestimmen.

Weiterhin umfasst das Kraftfahrzeug 10 zumindest eine Sensoreinrichtung 3 (z. B. eine Front-Radareinrichtung) zum Erfassen von Umfelddaten. Die zumindest eine Sensoreinrichtung 3 ist dabei in einer vorbestimmten Referenzlage P_{R} bezüglich des Fahrwerks 1 und/oder einer (nicht dargestellten) Fahrbahn am Chassis 2 befestigt (vgl. Konfiguration a). Die Referenzlage P_{R} (Position und Orientierung) kann dabei z. B. durch eine standardisierte Fahrzeugkonfiguration am Bandende der Fahrzeugfertigung (End-of-Line) gegeben sein. Die Referenzlage P_{R} der zumindest einen Sensoreinrichtung 3 (z. B. deren horizontaler Abstand zur Vorderachse (Überhanglänge), deren vertikaler Abstand zum Fahrwerk 1, etc.) kann somit bekannt sein. Bevorzugt erfolgt am Bandende der Fahrzeugfertigung ferner auch eine entsprechende Kalibrierung der zumindest einen Sensoreinrichtung 3.

Weiterhin umfasst das Kraftfahrzeug 10 eine Steuereinrichtung 4 (z. B. ein Steuergerät). Die Steuereinrichtung 4 ist dabei eingerichtet, die Umfelddaten im Falle einer - in Konfiguration b) beispielhaft dargestellten - Höhenabweichung ΔH der zumindest einen Sensoreinrichtung 3 (z. B. infolge einer Beladungsänderung des Kraftfahrzeugs 10) von der Referenzlage P_{R} anzupassen, um dadurch eine durch die Höhenabweichung ΔH verursachte Änderung der Umfelddaten zumindest teilweise zu kompensieren. Bevorzugt ist die Steuereinrichtung somit eingerichtet, im Falle einer Änderung der Einbauhöhe der zumindest einen Sensoreinrichtung 3 die Umfelddaten zur zumindest teilweisen Kompensation einer durch die Änderung der Einbauhöhe verursachten Änderung der Umfelddaten anzupassen, was nachfolgend noch eingehender beschrieben werden wird. Auf vorteilhafte Weise können dadurch Performanceeinbußen der zumindest einen Sensoreinrichtung 3 aufgrund einer ggf. temporär veränderten Einbauhöhe vermieden werden. Bevorzugt ist die Steuereinrichtung 4 dazu mit der zumindest einen Sensoreinrichtung 3 (z. B. über einen CAN-Bus) signaltechnisch verbunden. Zudem oder alternativ kann die Steuereinrichtung 4 vorzugsweise auch mit der Federsteuerung 7 (z. B. über einen CAN-Bus) signaltechnisch verbunden sein.

Nachdem vorstehend die konstruktiven Aspekte des Kraftfahrzeugs 10 ausgeführt wurden, soll im Folgenden auf das Anpassen bzw. Korrigieren der Umfelddaten für den hier exemplarisch dargestellten Fall von ausschließlich aktiv gefederten Achsen eingegangen werden. Bevorzugt kann die Steuereinrichtung dabei eingerichtet sein, einen Schätzwert S für die Höhenabweichung ΔH auf Grundlage eines Lagemodells des Kraftfahrzeugs 10 zu bestimmen und die Umfelddaten auf Basis des Schätzwerts S anzupassen (z. B. eine vom Schätzwerts S abhängige Korrekturfunktion auf die Umfelddaten anzuwenden). Das Lagemodell - unter welchem bevorzugt ein geometrisches bzw. räumliches Modell des Kraftfahrzeugs 10 verstanden werden kann, welches dessen voraussichtliche Lage im Raum beschreibt - kann dabei im vorliegenden Fall die von der Federsteuerung 7 bestimmten Höhenänderungen der jeweiligen aktiv gefederten Achsen als Niveauänderungsinformationen umfassen. Lediglich beispielhaft kann das Lagemodell die von der Federsteuerung 7 bereitgestellten Niveauänderungsinformationen umfassen, dass die Vorder- und Hinterachse bzw. die entsprechende aktive Federung 6a z. B. jeweils um 5 cm abgesenkt wurden. Entsprechend kann die Steuereinrichtung 4 auf Basis dieser (Niveauänderungs-)Informationen die Höhenabweichung ΔH der zumindest eine Sensoreinrichtung 3 auf 5 cm ansetzen.

Neben einer vorstehend beschriebenen reinen vertikalen Lageänderung des Chassis 2 kann die Höhenabweichung ΔH der zumindest einen Sensoreinrichtung 3 zudem oder alternativ auch - wie in Konfiguration b) dargestellt - aus einer Neigung des Chassis 2 resultieren. Lediglich beispielhaft kann das Lagemodell die von der Federsteuerung 7 bereitgestellten Niveauänderungsinformationen umfassen, dass die Hinterachse bzw. deren entsprechende aktive Federung 6a um 7cm und die Vorderachse bzw. deren entsprechende aktive Federung 6a um 2 cm abgesenkt wurde. Entsprechend setzt sich hier die Höhenabweichung ΔH aus einer vertikalen Verschiebung um 2 cm sowie einem Neigungsanteil zusammen, wobei der entsprechende Fahrzeugneigungswinkel α über den Zusammenhang α = acrctan (5cm/L) gegeben ist. L bezeichnet hierbei den festen Radstand des Kraftfahrzeugs 10. Über die ebenfalls bekannte Referenzlage P_{R} der zumindest einen Sensoreinrichtung 3 im Kraftfahrzeug 10, d. h. insbesondere über den dadurch bekannten horizontalen Abstand x der zumindest einen Sensoreinrichtung 3 zur Lagerung/Federung des Chassis 2 an der Vorderachse (Überhanglänge) und deren vertikalen Abstand y zur Lagerung/Federung des Chassis 2 an der Vorderachse, kann über den Zusammenhang x·sin α + y·cos α (Drehmatrix) der durch die Neigung/Drehung verursachte Neigungsanteil der Höhenabweichung ΔH bestimmt werden, welcher im vorliegenden Fall der vorgenannten Verschiebung entgegengerichtet ist. Entsprechend kann die Steuereinrichtung 4 durch ein Berücksichtigen dieser beiden Anteile (vertikale Verschiebung und Neigungsanteil), welche aus den von der Federsteuerung 7 bereitgestellten Niveauänderungsinformationen sowie geometrischen Daten des Kraftfahrzeugs 10 ermittelt werden können, ein Schätzwert für die Höhenabweichung ΔH der zumindest einen Sensoreinrichtung 3 errechnet werden, der sodann für eine entsprechende Korrektur der Umfelddaten verwendet werden kann.

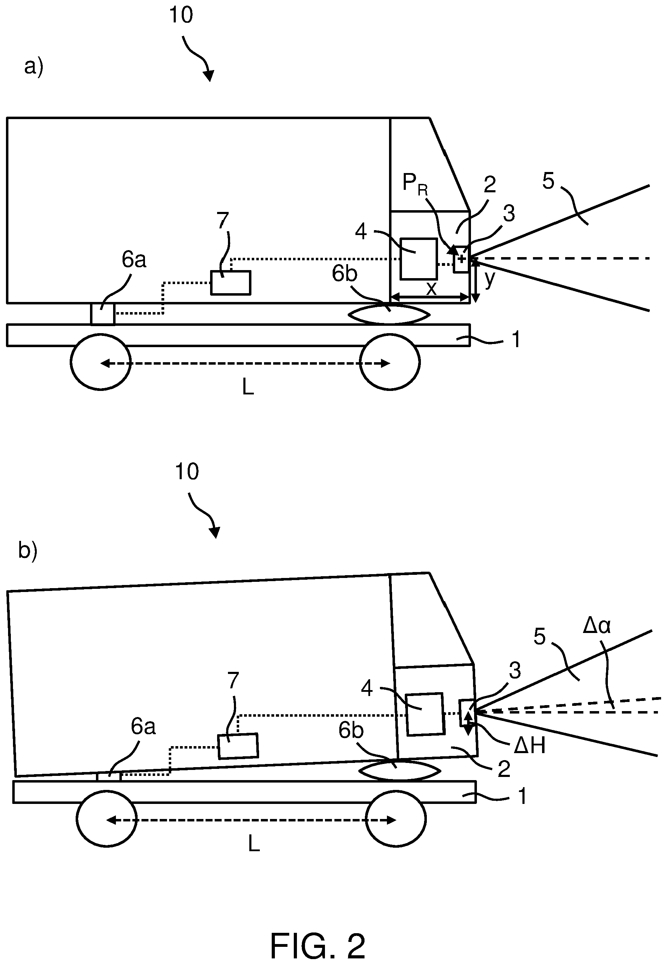

Figur 2 zeigt eine schematische Darstellung eines Kraftfahrzeugs 10 gemäß einer zweiten Ausführungsform in zwei Konfigurationen. Im Gegensatz zu der in Figur 1 dargestellten Ausführungsform umfasst das hier exemplarisch dargestellte Kraftfahrzeug 10 eine aktiv gefederte Hinterachse und eine passiv gefederte Vorderachse. Lediglich beispielhaft kann die Hinterachse dabei eine aktive Federung 6a (z. B. in Form einer Luftfederung mit Luftfederbalg) aufweisen und die Vorderachse eine passive Federung 6b (z. B. in Form einer Blattfederung). Als passive Federung 6b kann hierbei bevorzugt eine Federung verstanden werden, welche kein gezieltes Beeinflussen des Federverhaltens, insbesondere des Federwegs, zulässt. Mit anderen Worten kann bei einer derartigen passiven Federung 6b vorzugsweise keine bewusste Niveauregulierung (z. B. ein Einstellen verschiedener vorprogrammierter Fahrniveaus) des Chassis 2 möglich sein. Entsprechend kann - im Gegensatz zu der in Figur 1 dargestellten Ausführungsform - vorliegend auch keine signaltechnische Verbindung zwischen der Federsteuerung 7 und der (passiven) Federung 6b der Vorderachse bestehen. Die aktiv gefederte (z. B. luftgefederte) Hinterachse kann wiederum eine aktiven Federung 6a (z. B. in Form einer Luftfederung mit Luftfederbalg) aufweisen, die (z. B. über einen CAN-Bus) mit der Federsteuerung 7 zur Niveauregulierung verbunden sein kann. Von der Federsteuerung 7 kann der Steuereinrichtung 4 wiederum die Höhenänderungen der aktiv gefederten Achse als Niveauänderungsinformationen bereitgestellt werden. Lediglich beispielhaft können die vorgenannten Höhenänderungen dazu z. B. mittels eines CAN-Busses zwischen der Federsteuerung 7 und der Steuereinrichtung 4 übertragen werden.

Um in dem in Konfiguration b) dargestellten Fall einer (z. B. beladungsabhängigen) Lageänderung des Chassis 2 relativ zum Fahrwerk 1 die sich aus der Höhenabweichung ΔH der zumindest einen Sensoreinrichtung 3 ergebenden Änderungen der von der zumindest einen Sensoreinrichtung 3 erfassten Umfelddaten zumindest teilweise zu kompensieren, kann die Steuereinrichtung bevorzugt wieder eingerichtet sein, einen Schätzwert S für die Höhenabweichung ΔH auf Grundlage eines Lagemodells des Kraftfahrzeugs 10 zu bestimmen. Hierzu kann das Lagemodell die von der Federsteuerung 7 bereitgestellte Höhenänderung der aktiv gefederten Achse als Niveauänderungsinformation umfassen. Beispielsweise kann die Höhenänderung ein Absenken der Hinterachse um 5 cm sein. Für die in dieser Ausführungsform exemplarisch vorhandene passiv gefederte (z. B. blattgefederte) Vorderachse sind vorliegend jedoch keine direkten Informationen über deren (z. B. beladungsabhänge) Höhenänderung vorhanden. Um auch in diesem Fall einen möglichst genauen Schätzwert S für die Höhenabweichung ΔH der zumindest einen Sensoreinrichtung 3 bestimmen zu können, kann im vorliegenden Fall die zumindest eine Sensoreinrichtung 3 vorzugsweise ausgebildet sein, selbstständig eine Elevationswinkelabweichung Δα der zumindest einen Sensoreinrichtung 3 von der Referenzlage P_{R} zu bestimmen. Diese (z. B. über eine statistische Auswertung von Reflexionen von Objekten im Erfassungsbereich 5 der zumindest einen Sensoreinrichtung 3 bestimmte) Elevationswinkelabweichung Δα kann dann (z. B. über eine Datenverbindung in Form eines CAN-Busses) an die Steuereinrichtung 3 übertragen werden bzw. von der Steuereinrichtung 3 abgefragt werden, um als Niveauänderungsinformation ins Lagemodell des Kraftfahrzeugs 10 einzufließen. Lediglich beispielhaft kann die von der zumindest einen Sensoreinrichtung 3 bestimmte Elevationswinkelabweichung Δα = 3° "nach oben" sein. Wie vorstehend im Zusammenhang mit Figur 1 beschrieben kann aus dieser (Neigungs-)Angabe zusammen mit der Referenzlage P_{R} der zumindest einen Sensoreinrichtung 3 im Kraftfahrzeug 10, insbesondere deren horizontaler Abstand x zur Lagerung/Federung des Chassis 2 an der Vorderachse bzw. deren vertikaler Abstand y zur Lagerung/Federung des Chassis 2, über den Zusammenhang x·sin Δα + y·cos Δα der durch die Neigung/Drehung verursachte reine Neigungsanteil der Höhenabweichung ΔH bestimmt werden. Zusammen mit der durch die Federsteuerung 7 der aktiv gefederten Achse bekannte Niveauänderungsinformationen betreffend eine mögliche Verschiebung/Absenkung des Chassis 2 relativ zum Fahrwerk kann auf vorteilhafte Weise wiederrum ein möglichst genauer Schätzwert S für die Höhenabweichung ΔH der zumindest eine Sensoreinrichtung 3 errechnet werden. Besonders vorteilhaft ist dabei, dass dies auch im Fall passiv gefederter Achsen, in dem in der Regel keine unmittelbaren Informationen über mögliche Höhenänderungen zur Verfügung stehen, möglich ist.

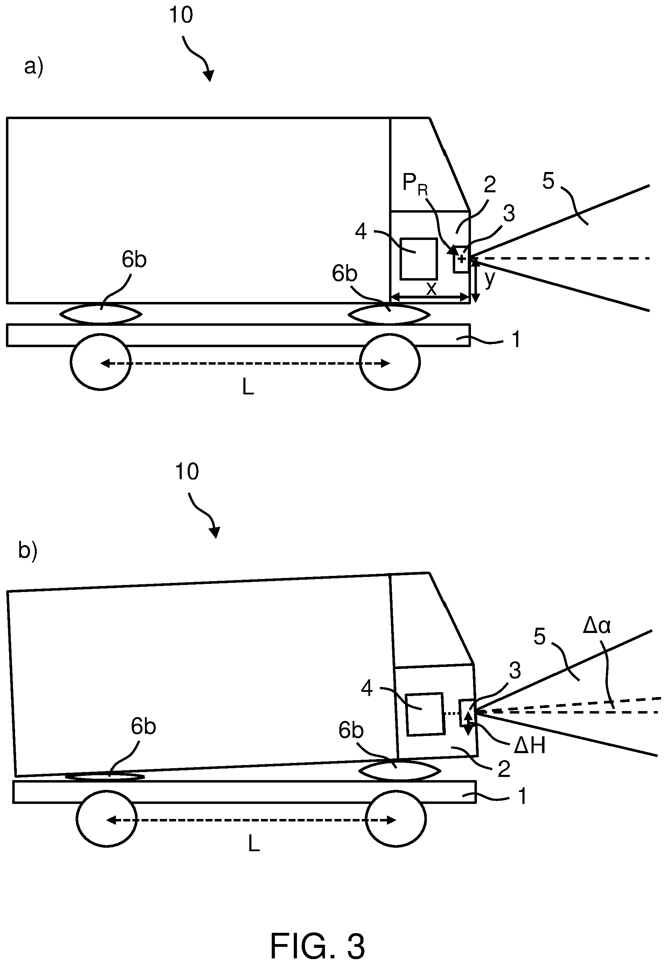

Figur 3 zeigt eine schematische Darstellung eines Kraftfahrzeugs 10 gemäß einer dritten Ausführungsform in zwei Konfigurationen. Im Gegensatz zu den bisherigen Ausführungsformen umfasst das hier exemplarisch dargestellte Kraftfahrzeug 10 ausschließlich passiv gefederte Achsen (z. B. in Form einer Vorderachse mit einer Blattfederung und eine Hinterachse mit einer Blattfederung). Aufgrund der rein passiven Auslegung der Federungen 6b stehen hier (weil vorliegend z. B. kein On Board Weighing System vorhanden ist) bevorzugt keine unmittelbaren Informationen über Höhenänderungen der jeweiligen Achsen zu Verfügung. Um auch in diesem Fall einen möglichst genauen Schätzwert S für die Höhenabweichung ΔH der zumindest einen Sensoreinrichtung 3 bestimmen zu können, kann im vorliegenden Fall das Lagemodell wiederum eine Elevationswinkelabweichung Δα der zumindest einen Sensoreinrichtung 3 sowie eine, vorzugsweise vorbestimmte, Neigung αₘₐₓ des Kraftfahrzeugs 10 im Falle einer maximal zulässigen Beladung des Kraftfahrzeug 10 umfassen. D. h. die zumindest eine Sensoreinrichtung 3 kann hier wieder ausgebildet sein, selbstständig eine Elevationswinkelabweichung Δα der zumindest einen Sensoreinrichtung 3 von der Referenzlage P_{R} zu bestimmen. Aus dieser ermittelten Elevationswinkelabweichung Δα kann wiederum - wie vorstehend beschrieben worden ist - auf eine allein aus der aktuellen Neigung des Chassis 2 resultierender Neigungsanteil der Höhenabweichung ΔH bestimmt werden. Dieser kann jedoch auch noch von einer generellen Verschiebung des Chassis 2 zum Fahrwerk 1 überlagert sein. Dieser Änderung kann jedoch dahingehend abgeschätzt werden, dass diese kleiner oder gleich einer z. B in Vorversuchen ermittelten Niveauänderung im Falle einer maximal zulässigen Beladung des Kraftfahrzeugs 10 ist. Entsprechend kann aus der Maximalneigung αₘₐₓ des Kraftfahrzeugs 10 oder einer direkten Bestimmung der sich bei maximaler Beladung einstellenden Höhenänderung derjeweilige(n) Achse(n) in Vorversuchen zusammen mit dem "live" ermittelten Neigungsanteil der Höhenabweichung ΔH wiederum auf vorteilhafte Weise ein Schätzwert S für die gesamte Höhenabweichung ΔH bestimmt werden, der sodann zur Korrektur der Umfelddaten verwendet werden kann.

Auch wenn die vorstehenden Varianten dabei vorrangig für ein zweiachsiges Kraftfahrzeug 10 beschrieben wurden, ist es für den Fachmann sofort offensichtlich, dass die eben beschriebenen Lehren auch auf Kraftfahrzeuge 10 mit mehr als zwei Achsen übertragbar sind und dort eingesetzt werden können.

Weiterhin ist es für einen Fachmann ersichtlich, dass obwohl die Erfindung unter Bezugnahme auf bestimmte Ausführungsbeispiele beschrieben worden ist, verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Fahrwerk
- 2: Chassis
- 3: Sensoreinrichtung
- 4: Steuereinrichtung
- 5: Erfassungsbereich
- 6a: passive Federung
- 6b: aktive Federung
- 7: Federsteuerung
- 10: Kraftfahrzeug
- aₘₐₓ: Neigung des Kraftfahrzeugs im Falle einer maximal zulässigen Beladung
- Δα: Elevationswinkelabweichung
- ΔH: Höhenabweichung
- L: Radstand
- P_{R}: Referenzlage
- S: Schätzwert

## Patentansprüche

1. Kraftfahrzeug (10), vorzugsweise Nutzfahrzeug, aufweisend:
- ein Fahrwerk (1);
- ein Chassis (2), das am Fahrwerk (1) federnd gelagert ist;
- zumindest eine Sensoreinrichtung (3), vorzugsweise Radareinrichtung, zum Erfassen von Umfelddaten, wobei die zumindest eine Sensoreinrichtung (3) in einer vorbestimmten Referenzlage (P_{R}) bezüglich des Fahrwerks (1) am Chassis (2) befestigt ist; und
- eine Steuereinrichtung (4), die eingerichtet ist, die Umfelddaten im Falle einer, vorzugsweise beladungsbedingten, Höhenabweichung (ΔH) der zumindest einen Sensoreinrichtung (3) von der Referenzlage (P_{R}) anzupassen, um dadurch eine durch die Höhenabweichung (ΔH) verursachte Änderung der Umfelddaten zumindest teilweise zu kompensieren.

2. Kraftfahrzeug (10) nach Anspruch 1, **dadurch gekennzeichnet, dass** die zumindest eine Sensoreinrichtung (3) eine Radareinrichtung, vorzugsweise Front-Radareinrichtung, aufweist.

3. Kraftfahrzeug (10) nach einem der vorherigen Ansprüche, **dadurch gekennzeichnet, dass** die zumindest eine Sensoreinrichtung (3) bezüglich des Chassis (2) unbeweglich ist und/oder dass die zumindest eine Sensoreinrichtung (3) einen, vorzugsweise kegelförmigen, Erfassungsbereich (5) aufweist, dessen Orientierung relativ zum Chassis (2) unveränderlich ist.

4. Kraftfahrzeug (10) nach einem der vorherigen Ansprüche, **dadurch gekennzeichnet, dass** die Steuereinrichtung (4) eingerichtet ist, einen Schätzwert (S) für die Höhenabweichung (ΔH) auf Grundlage eines Lagemodells des Kraftfahrzeugs (10) zu bestimmen und die Umfelddaten auf Basis des Schätzwerts (S) anzupassen, wobei das Lagemodell die Referenzlage (P_{R}) und/oder einen Radstand (L) des Kraftfahrzeugs (10) und/oder mindestens eine Niveauänderungsinformation umfasst.

5. Kraftfahrzeug (10) nach Anspruch 4, **dadurch gekennzeichnet, dass** die zumindest eine Sensoreinrichtung (3) ausgebildet ist, eine Elevationswinkelabweichung (Δα) der zumindest einen Sensoreinrichtung (3) von der Referenzlage (P_{R}), vorzugsweise selbstständig, zu bestimmen, und wobei die mindestens eine Niveauänderungsinformation des Lagemodells die Elevationswinkelabweichung (Δα) umfasst.

6. Kraftfahrzeug (10) nach Anspruch 5, **dadurch gekennzeichnet, dass** das Fahrwerk (1), vorzugsweise ausschließlich, passiv gefederte, vorzugsweise blattgefederte, Achsen umfasst und die mindestens eine Niveauänderungsinformation des Lagemodells ferner eine, vorzugsweise vorbestimmte, Neigung (amax) des Kraftfahrzeugs (10) im Falle einer maximal zulässigen Beladung des Kraftfahrzeug (10) umfasst.

7. Kraftfahrzeug (10) nach einem der Ansprüche 4 bis 6, **dadurch gekennzeichnet, dass** das Fahrwerk (1) eine aktiv gefederte, vorzugsweise luftgefederte, Achse umfasst und das Kraftfahrzeug (10) eine Federsteuerung (7) zur Niveauregulierung der aktiv gefederten Achse umfasst, wobei die Federsteuerung (7) eingerichtet ist, eine Höhenänderung der aktiv gefederten Achse zu bestimmen; und wobei die mindestens eine Niveauänderungsinformation des Lagemodells die Höhenänderung umfasst.

8. Kraftfahrzeug (10) nach Anspruch 7, **dadurch gekennzeichnet, dass** das Fahrwerk (1) ferner eine passiv gefederte, vorzugsweise blattgefederte, Achse, vorzugsweise Vorderachse umfasst, wobei vorzugsweise die aktiv gefederte, vorzugsweise luftgefederte, Achse eine Hinterachse des Kraftfahrzeugs (10) ist.

9. Kraftfahrzeug (10) nach Anspruch 7, **dadurch gekennzeichnet, dass** das Fahrwerk (1) ausschließlich aktiv gefederte, vorzugsweise luftgefederte, Achsen umfasst.

10. Kraftfahrzeug (10) nach einem der Ansprüche 4 bis 9, **gekennzeichnet durch** ein Wiegesystem, das eingerichtet ist, eine auf zumindest eine Achse des Fahrwerks (1) wirkende Achslast zu bestimmen; und wobei die mindestens eine Niveauänderungsinformation des Lagemodells die Achslast und/oder eine von der Achslast abgeleitete Größe umfasst.

11. Kraftfahrzeug (10) einem der Ansprüche 4 bis 10, **dadurch gekennzeichnet, dass** die Steuereinrichtung (4) eingerichtet ist, eine vom Schätzwert (S) abhängige Korrekturfunktion, vorzugsweise eine Koordinatentransformationsfunktion und/oder Kennlinienfunktion, auf die Umfelddaten zur zumindest teilweisen Kompensation der durch die Höhenabweichung (ΔH) verursachte Änderung anzuwenden.

12. Kraftfahrzeug (10) nach einem der vorherigen Ansprüche, **dadurch gekennzeichnet, dass** das Kraftfahrzeug (10) keinen Bewegungs- und/oder Lagesensor zur Ermittlung einer Lage des Chassis (2) bezüglich des Fahrwerks (1) umfasst.

13. Kraftfahrzeug (10) nach einem der vorherigen Ansprüche, **dadurch gekennzeichnet, dass** die Höhenabweichung (ΔH) der zumindest einen Sensoreinrichtung (3) von der Referenzlage (P_{R}) eine Höhenabweichung (ΔH) umfasst, die aus einer Änderung einer Beladung, Gewichtsverteilung und/oder Federung des Kraftfahrzeugs (10) resultiert.

14. Kraftfahrzeug (10) nach einem der vorherigen Ansprüche, **dadurch gekennzeichnet,**
a) **dass** die Sensoreinrichtung (3) eine Front-Sensoreinrichtung, vorzugsweise eine Front-Radareinrichtung, umfasst; und/oder
b) **dass** die Sensoreinrichtung (3) ausgebildet ist, einen in Vorwärtsfahrtrichtung vor dem Kraftfahrzeug (10) befindlichen Bereich zu erfassen; und/oder
c) **dass** die Sensoreinrichtung (3) an einer Frontstoßstange des Kraftfahrzeugs (10) befestigt ist.

15. Kraftfahrzeug (10) nach einem der vorherigen Ansprüche, **dadurch gekennzeichnet, dass** die Steuereinrichtung (4)
a) ein, vorzugsweise zentrales, Fahrzeugsteuergerät zur Steuerung einer Mehrzahl von Fahrzeugkomponenten umfasst; und/oder
b) ein, vorzugsweise sensorseitig integriertes, Sensor-Steuergerät, vorzugsweise Radar-Steuergerät, zur Steuerung einer einzelnen Fahrzeugkomponente, vorzugsweise eine Radareinrichtung, umfasst.
